# EUROPÄISCHE PATENTSCHRIFT

(11) **EP 1 874 665 B1**
(45) Veröffentlichungstag und Bekanntmachung des Hinweises auf die Patenterteilung: **06.01.2010**
(21) Anmeldenummer: 06724447.5
(22) Anmeldetag: 20.04.2006
(51) Int. Cl.: B65G 35/06, B65G 47/53

(54) **DOPPELGURT-FÖRDEREINRICHTUNG MIT RICHTUNGSWECHSEL**
DIRECTIONAL-CHANGE TWIN-BELT CONVEYOR
DISPOSITIF DE TRANSPORT DOUBLE BANDE A CHANGEMENT DE DIRECTION

(30) Priorität: 23.04.2005 DE 102005019067
(43) Veröffentlichungstag der Anmeldung: 09.01.2008
(73) Patentinhaber: Knapp AG, 8075 Hart bei Graz (AT)
(72) Erfinder: FREUDELSPERGER, Karl, A-8075 Hart bei Graz (AT)
(74) Vertreter: Hanke, Hilmar
(86) Internationale Anmeldenummer: PCT/EP2006/003607
(87) Internationale Veröffentlichungsnummer: WO 2006/114234

(56) Entgegenhaltungen:
- DE-A1- 10 055 574
- DE-U1- 20 210 975
- FR-A- 2 842 794

## Beschreibung

Die Erfindung betrifft eine Fördereinrichtung gemäß dem Oberbegriff des Anspruchs 1.

Bei bekannten Umsetzanordnungen erfolgt das Umsetzen zwischen Längs- und Quer-Förderern in Form von Ketten-, Doppelgurt-, Einzelgurt- oder Rollenförderern durch Drehtische, die bei Stillstand des Drehtisches das Stückgut oder den Stückgut-Träger, wie Behälter oder Palette, aufnehmen und langsam um die Mitte des Stückguts oder längs eines Bogens in die Abgaberichtung der zweiten Förderstrecke schwenken, um dort das Stückgut abzugeben. Auch kennt man Kurvenstücke bei Rollenförderern, die selbst zylindrische Querrollen und eine Seitenführung haben. Die Rollen sind angetrieben, um eine Richtungsänderung des Stückguts in der Kurve zu unterstützen. Die Richtungsänderung wird vornehmlich durch die Seitenführung bewirkt, die verhindert, daß das Stückgut von der Kurvenbahn läuft.

Aus der DE 100 55 574 A1 ist eine Fördereinrichtung gemäß dem Oberbegriff des Anspruchs 1 bekannt.

Der Erfindung liegt die Aufgabe zugrunde, eine Doppelgurt-Fördereinrichtung mit Richtungswechsel der eingangs genannten Art bereitzustellen, deren Umsetzanordnung sehr einfach aufgebaut ist und gleichwohl zuverlässig betrieben werden kann.

Gelöst wird die der Erfindung zugrundeliegende Aufgabe durch eine Fördereinrichtung der im Anspruch 1 angegebenen Art. Vorteilhafte Weiterbildungen ergeben sich aus den Ansprüchen 2 bis 11.

Wesen der erfindungsgemäßen Fördereinrichtung ist, daß die seitlichen Umlaufgurte der beiden Doppelgurtförderer die einzigen Antriebsmittel der Fördereinrichtung sind und die schräg stehenden nicht angetriebenen (ersten) Führungsrollen als ausschließliche Umlenkmittel im Winkelbereich dienen können, welche gefördertes Stückgut vom ersten Doppelgurtförderer auf einer Kurvenbahn zum zweiten Doppelgurtförderer umlenken.

Mit Vorzug können auch außerhalb des Winkelbereichs im Bereich des Längsendes des zweiten Doppelgurtförderers, welches an den ersten Doppelgurtförderer angrenzt, zwischen den beiden Umlaufgurten weitere (zweite) Führungsrollen nach Art der ersten Führungsrollen als Umlenkmittel vorgesehen sein.

Hierbei können in besonders vorteilhafter Weiterbildung die ersten und zweiten Führungsrollen hinsichtlich Überstand und/oder Lage der diversen Drehachsen einstellbar ausgebildet sein.

Die ersten und zweiten Führungsrollen sind insbesondere schmale Einzelrollen aus Gummi.

Die ersten und zweiten Führungsrollen sind vorzugsweise in eigenen Bodenplatten als Baueinheit aufgenommen und befestigt.

Mit Vorzug besitzen die Bodenplatte Aussparungen, durch die die Führungsrollen geringfügig nach oben in einem Überstand vorstehen und diese in einen rollenden Führungseingriff mit der Bodenseite des Stückguts bringbar sind.

Eine Überwachungseinrichtung kann vorgesehen sein, welche eine Kurvenfahrt des Stückguts, insbesondere den gefahrenen Bogen des Stückguts und/oder einen Stückgut-Stillstand überwacht. Tritt ein Ausnahmezustand ein, kann die Förderanlage automatisch angehalten und/oder der Ausnahmezustand gegebenenfalls automatisch behoben werden.

Durch die Erfindung können selbst schwere Stückgüter lediglich durch die Führungsrollen von einem Doppelgurtförderer auf einen anderen Doppelgurtförderer längs einer Kurvenbahn gefördert bzw. umgeleitet werden, ohne daß es eines besonderen Antriebs der Rollen bedarf und ohne daß Seitenführungen für die Stückgüter längs der Kurvenbahn notwendig sind. Gleichwohl können Seitenbegrenzungswände vorgesehen sein, welche allerdings bei normaler Kurvenfahrt nicht in einer Berührung mit dem umzulenkenden Stückgut stehen, sondern nur im Notfall das Stückgut auf der Kurvenbahn halten.

Die Stückgüter werden im Betrieb eingangs in der Umsetzanordnung von dem ersten Doppelgurtförderer geschoben und dabei von den schräg stehenden bodenseitig gut greifenden nicht angetriebenen Führungsrollen im Winkelbereich solange umgelenkt und geschoben, bis sie vom zweiten Doppelgurtförderer ausgangsseitig erfaßt und aus der Umsetzanordnung herausgezogen werden. Die Kurvenbahn wird in der Praxis durch Einstellen des Überstands der Führungsrollen und durch Einstellen der Schrägstellung der Führungsrollen bestimmt, wobei die Schrägstellung gegebenenfalls einen Seitenschlupf des Stückguts berücksichtigt bzw. ausgleicht.

Dies ist eine verblüffend einfache nicht vorhersehbare Umlenkmethode. Wären die Führungsrollen in aufwändiger Weise angetrieben, wäre ein geführtes Umlenken möglicherweise für den Durchschnittsfachmann vorstellbar, weil dann, ähnlich einem Kraftfahrzeug mit Vorderrad-Antrieb, die Stückgüter in die Kurve direkt hineingezogen würden.

Besonderer Vorteil der Erfindung ist, daß auf die Seitenführungsbleche nach dem Stand der Technik verzichtet werden kann, welche zum einen einen baulichen Mehraufwand bedeuten und zum anderen mit einem Reibungsverschleiß mit der Seitenwand eines Stückgutes einhergehen.

Auch kann durch die Erfindung auf einfache Weise eine Weiche je nach Schrägstellung der Führungsrollen eingerichtet werden, da Seitenführungsbleche nach dem Stand der Technik nicht vorhanden sind und mithin nicht demontiert werden oder anderweitig überwunden werden müssen.

Bei der Erfindung wird der Vorteil der Doppelgurtfördertechnik hinsichtlich der Integrationsmöglichkeit der Zusatzfunktion eines Umsetzens auf besonders einfache Weise genutzt.

Es handelt sich im besonderen lediglich um ein Blech als Bodenplatte, welches nicht angetriebene Gummirollen richtungsverstellbar integriert hat, wodurch auf sehr einfache Weise die Behälter um ein Eck gefördert werden können. Es handelt sich insbesondere um eine Umlenkung von 90° längs einer Kurvenbahn. Die Technik an sich kann auch für andere Kurvenradien eingesetzt werden. Durch den Doppelgurt auf der abziehenden Strecke wird der Behälter gesichert von dem nicht angetriebenen Rollenbereich abgezogen. Das gleiche gilt bei der zuführenden Strecke. Hier wird der Behälter mittels der Doppelgurttechnik auf die Rollen geschoben. Die Rollen mit integriertem Gummi dienen dann zur Richtungsänderung.

Weitere vorteilhaften Merkmale der Erfindung ergeben sich aus den Unteransprüchen sowie aus der nachfolgenden Beschreibung, in der bevorzugte Ausführungsbeispiele der Erfindung anhand der Zeichnungen näher erläutert sind; es zeigen:

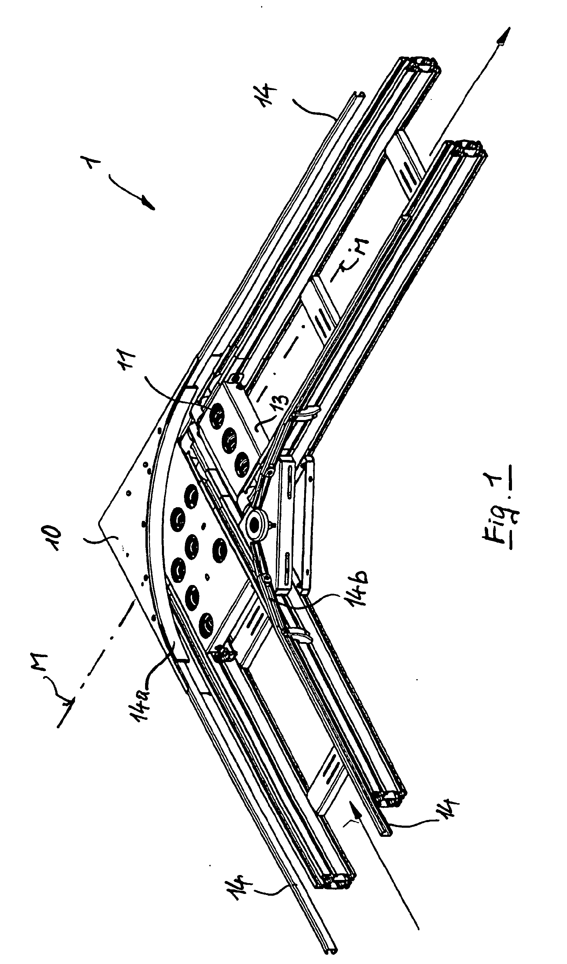

- Figur 1: eine erfindungsgemäße winklige Doppelgurt-Fördereinrichtung mit einer Umsetzanordnung im Winkelbereich in einer schematischen perspektivischen Ansicht,

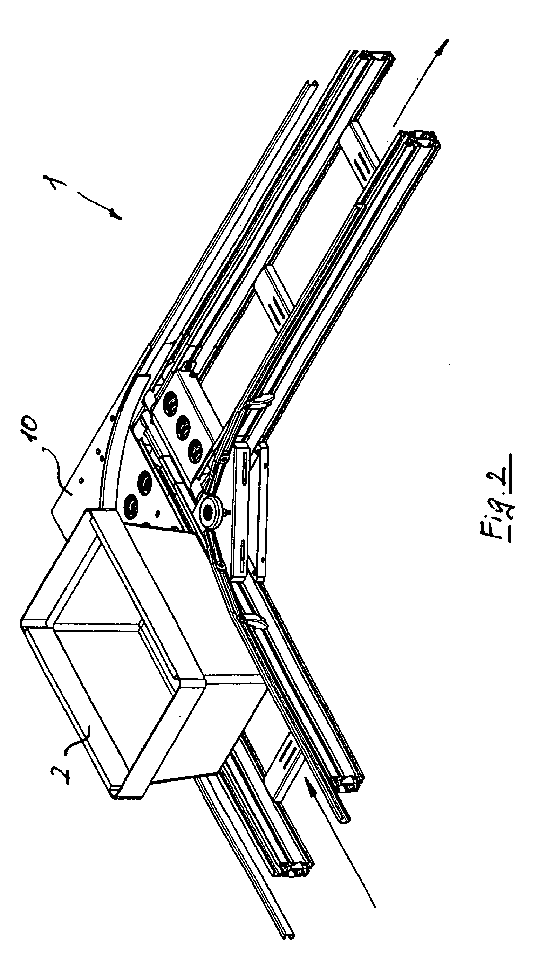

- Figur 2: die Fördereinrichtung nach Figur 1 mit einem in den Winkelbereich hineingeförderten Stückgut, und

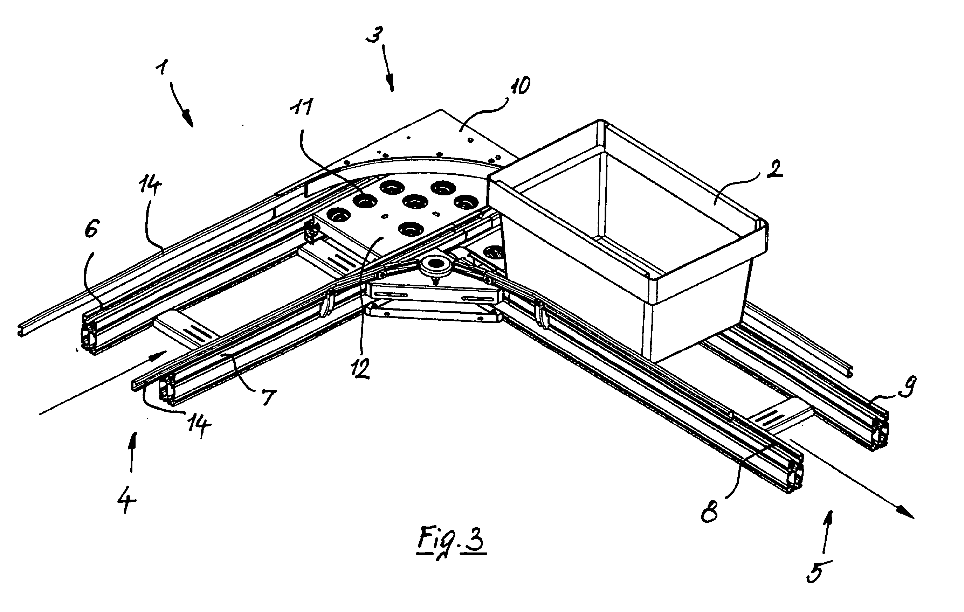

- Figur 3: die Fördereinrichtung nach Figur 1 mit einem aus dem Winkelbereich herausgeförderten Stückgut.

Gemäß Zeichnungen umfaßt eine Fördereinrichtung 1 mit Richtungswechsel zum Fördern von Stückgut 2 längs einer ersten Förderstrecke und einer anders gerichteten zweiten Förderstrecke eine Umsetzanordnung 3 zum Umsetzen von gefördertem Stückgut von der ersten auf die zweite Förderstrecke, wobei erste und zweite Förderstrecke Doppelgurtförderer 4, 5 mit jeweils zwei seitlichen endlosen angetriebenen Umlaufgurten 6, 7; 8, 9 sind.

Die Umsetzanordnung 3 liegt im wesentlichen in einem Winkelbereich 10, welcher durch die beiden aufeinander zu gerichteten Längsenden der beiden Doppelgurtförderer 4, 5 bestimmt ist.

Im besonderen schließt sich der zweite Doppelgurtförderer 5 am Längsende des ersten Doppelgurtförderers 4 unmittelbar seitlich in einem rechten Winkel an, wobei im Winkelbereich 10 das Längsende der Umlaufgurte 6, 7 des ersten Doppelgurtförderers 4 in die Verlängerung der Förderbahn des zweiten Doppelgurtförderers 5 zumindest bis zur Förderbahnmitte M des zweiten Doppelgurtförderers reicht.

Im Winkelbereich 10 zwischen den beiden Umlaufgurten 6, 7 des ersten Doppelgurtförderers 4 sind schräg stehende nicht angetriebene Führungsrollen 11 vorgesehen, welche gefördertes Stückgut 2 vom ersten Doppelgurtförderer 4 auf einer Kurvenbahn im Winkelbereich 10 zum zweiten Doppelgurtförderer 5 umlenken.

Die Führungsrollen 11 sind in einer Bodenplatte 12 als Baueinheit aufgenommen und befestigt, wobei die Bodenplatte im Winkelbereich 10 zumindest teilweise zwischen den beiden Umlaufgurten 6, 7 des ersten Doppelgurtförderers 4 angeordnet ist.

Das Längsende des erstes Doppelgurtförderers 4 liegt im Ausführungsbeispiel der Zeichnungen am äußersten Längsrand des zweiten Doppelgurtförderers 5 in der Verlängerung des äußeren Umlaufgurts 9.

Bevorzugt reicht in einer nicht veranschaulichten Variante das Längsende des ersten Doppelgurtförderers jedoch nur bis zur Förderbahnmitte M des zweiten Doppelgurtförderers 5 oder knapp darüber, ohne daß dadurch der Förderantrieb in der Kurve nennenswert beeinträchtigt wird. Dann kann der Freiraum in der Verlängerung des dem zweiten Doppelgurtförderer 5 benachbarten Umlaufgurts 7 des ersten Doppelgurtförderers 4 bis zum äußersten Rand des zweiten Doppelgurtförderers 5 für die Anordnung weiterer Führungsrollen 11 genutzt werden, welche ebenfalls in der vorgenannten Bodenplatte 12 integriert sein können.

Insbesondere kann also sich das Längsende der Umlaufgurte 6, 7 des ersten Doppelgurtförderers 4 bis zur Mitte M oder knapp über die Mitte der Verlängerung der Förderbahn des zweiten Doppelgurtförderers 5 erstrecken und auch in der Verlängerung des dem zweiten Doppelgurtförderers 5 benachbarten Umlaufgurts 7 des ersten Doppelgurtförderers 4 zumindest eine Führungsrolle 11 vorgesehen sein, welche zur Förderbahn des zweiten Doppelgurtförderers 5 ausgerichtet oder nahezu ausgerichtet ist.

Die Bodenplatte 12 besitzt Aussparungen, durch die die Führungsrollen 11 geringfügig nach oben in einem Überstand vorstehen und dadurch die Führungsrollen 11 in einen rollenden Führungseingriff mit der Bodenseite des Stückguts 2 gebracht werden können.

Die Führungsrollen 11 sind Gummirollen und insbesondere als schmale Einzelrollen ausgebildet.

Gemäß den Zeichnungen sind auch am Längsende des zweiten Doppelgurtförderers 5, welches an den Winkelbereich 10 des ersten Doppelgurtförderers 4 angrenzt, zwischen den beiden Umlaufgurten 8, 9 weitere Führungsrollen 11 der vorgenannten Art vorgesehen, welche in einer Platte 13 nach Art der Bodenplatte 12 liegen und oberseitig vorstehen.

Die Doppelgurt-Fördereinrichtung 1 besitzt insgesamt beidseits eine zumeist lineare Seitenbegrenzungswand 14 für das Stückgut 2 in Förderrichtung. Im Winkelbereich 10 des ersten Doppelgurtförderers 4 ist die Seitenbegrenzungswand radial außen durch ein Kreisbogenstück 14a und radial innen durch ein Kreisbodenstück 14b gebildet, welche bei einem Umsetzen eines Stückgutes nicht mit den Seitenwänden des Stückgutes eingreifen und nur Rückhaltefunktion im Notfall besitzen.

Es kann eine Überwachungseinrichtung vorgesehen sein, welche eine Kurvenfahrt des Stückguts 2, insbesondere den gefahrenen Bogen des Stückguts und/oder einen Stückgut-Stillstand überwacht.

In einer Variante können die Führungsrollen 11 hinsichtlich Überstand und/oder Lage der diversen Drehachsen einstellbar ausgebildet sein.

Durch die Erfindung können ersichtlich Stückgüter 2 bei Antrieb beider Doppelgurtförderer 4, 5 lediglich durch die schmalen, gut greifenden, mehr oder weniger nur punktuell eingreifenden Führungsrollen 11 von einem Doppelgurtförderer auf einen anderen längs einer Kurvenbahn gefördert bzw. umgeleitet werden, ohne daß es eines besonderen Antriebs der Rollen bedarf und ohne daß Seitenführungen für die Stückgüter längs der Kurvenbahn notwendig sind. Es genügt eingangs des Winkelbereichs 10 das Schieben der Stückgüter 2 auf den Umlaufgurten 6, 7 des ersten Doppelgurtförderers 4, im Endbereich erfindungsgemäß nur auf dem Umlaufgurt 7, und ausgangs des Winkelbereichs 10 das Ziehen der Stückgüter 2 auf den Umlaufgurten 8, 9 des zweiten Doppelgurtförderers.

## Patentansprüche

1. Fördereinrichtung (1) mit Richtungswechsel zum Fördern von Stückgut (2) längs einer ersten Förderstrecke und einer anders gerichteten zweiten Förderstrecke, sowie einer Umsetzanordnung (3) zum Umsetzen von gefördertem Stückgut von der ersten auf die zweite Förderstrecke, wobei erste und zweite Förderstrecke Doppelgurtförderer (4, 5) mit jeweils zwei seitlichen endlosen angetriebenen Umlaufgurten (6, 7; 8, 9) sind, wobei sich der zweite Doppelgurtförderer (5) am Längsende des ersten Doppelgurtförderers (4) unmittelbar seitlich in einem Winkel anschließt und im Winkelbereich (10) das Längsende der Umlaufgurte (6, 7) des ersten Doppelgurtförderers (4) in die Verlängerung der Förderbahn des zweiten Doppelgurtförderers (5) zumindest bis zur Förderbahnmitte (M) des zweiten Doppelgurtförderers reicht, und im Winkelbereich (10) zwischen den beiden Umlaufgurten (6, 7) des ersten Doppelgurtförderers (4) nicht angetriebene Führungsrollen (11) vorgesehen sind, wobei die seitlichen Umlaufgurte (6, 7; 8, 9) der beiden Doppelgurtförderer (4, 5) die einzigen Antriebsmittel der Fördereinrichtung (1) sind,
**gekennzeichnet durch** die Schrägstellung der nicht angetriebenen (ersten) Führungsrollen (11), so dass die Führungsrollen als ausschließliche Umlenkmittel im Winkelbereich (10) dienen können und das geförderte Stückgut (2) vom ersten Doppelgurtförderer (4) auf einer Kurvenbahn zum zweiten Doppelgurtförderer (5) umlenken.

2. Fördereinrichtung nach Anspruch 1,
**dadurch gekennzeichnet,**
**daß** auch außerhalb des Winkelbereichs (10) im Bereich des Längsendes des zweiten Doppelgurtförderers (5), welches an den ersten Doppelgurtförderer (4) angrenzt, zwischen den beiden Umlaufgurten (8, 9) weitere (zweite) Führungsrollen (11) nach Art der ersten Führungsrollen als Umlenkmittel vorgesehen sind.

3. Fördereinrichtung nach Anspruch 1 oder 2,
**dadurch gekennzeichnet,**
**daß** die ersten und zweiten Führungsrollen (11) hinsichtlich Überstand und/oder Lage der diversen Drehachsen einstellbar sind.

4. Fördereinrichtung nach einem der Ansprüche 1 bis 3,
**dadurch gekennzeichnet,**
**daß** die ersten und zweiten Führungsrollen (11) schmale Einzelrollen aus Gummi sind.

5. Fördereinrichtung nach einem der Ansprüche 1 bis 4,
**dadurch gekennzeichnet,**
**daß** die ersten Führungsrollen (11) in einer Bodenplatte (12) als Baueinheit aufgenommen und befestigt sind, wobei die Bodenplatte im Winkelbereich (10) zumindest teilweise zwischen den beiden Umlaufgurten (6, 7) des ersten Doppelgurtförderers (4) angeordnet ist.

6. Fördereinrichtung nach einem der Ansprüche 2 bis 5,
**dadurch gekennzeichnet,**
**daß** die zweiten Führungsrollen (11) in einer eigenen Bodenplatte (13) als Baueinheit aufgenommen und befestigt sind, wobei die Bodenplatte (13) angrenzend an den Winkelbereich (10) im Bereich des Längsendes des zweiten Doppelgurtförderers (5) in Verlängerung und/oder zwischen den beiden Umlaufgurten (8, 9) des zweiten Doppelgurtförderers (5) angeordnet ist.

7. Fördereinrichtung nach einem der Ansprüche 1 bis 6,
**gekennzeichnet durch**
eine Erstreckung des Längsendes der Umlaufgurte (6, 7) des ersten Doppelgurtförderers (4) bis zur Mitte (M) oder knapp über die Mitte der Verlängerung der Förderbahn des zweiten Doppelgurtförderers (5), wobei
in der Verlängerung des dem zweiten Doppelgurtförderers (5) benachbarten Umlaufgurts (7) des ersten Doppelgurtförderers (4) zumindest eine erste Führungsrolle (11) vorgesehen ist, welche zur Förderbahn des zweiten Doppelgurtförderers (5) ausgerichtet oder nahezu ausgerichtet ist.

8. Fördereinrichtung nach einem der Ansprüche 5 bis 7,
**dadurch gekennzeichnet,**
**daß** die Bodenplatten (12, 13) Aussparungen besitzen, durch die die Führungsrollen (11) geringfügig nach oben in einem Überstand vorstehen und die Führungsrollen in einen rollenden Führungseingriff mit der Bodenseite des Stückguts (2) bringbar sind.

9. Fördereinrichtung nach einem der Ansprüche 1 bis 8,
**dadurch gekennzeichnet,**
**daß** eine Seitenbegrenzung (14) für das Stückgut (2) in Förderrichtung vorgesehen ist, vorzugsweise im Winkelbereich (10) des ersten Doppelgurtförderers (4) zumindest radial außen ein Kreisbogenstück (14a).

10. Fördereinrichtung nach einem der Ansprüche 1 bis 9,
**dadurch gekennzeichnet,**
**daß** erster und zweiter Doppelgurtförderer rechtwinklig zueinander verlaufen.

11. Fördereinrichtung nach einem der Ansprüche 1 bis 10,
**dadurch gekennzeichnet,**
**daß** eine Überwachungseinrichtung vorgesehen ist, welche eine Kurvenfahrt des Stückguts (2), insbesondere den gefahrenen Bogen des Stückguts und/oder einen Stückgut-Stillstand überwacht.

## Claims

1. Said conveying means (1) with change in direction for conveying said individually packaged product (2) along a first conveying section and a differently directed, second conveying section, as well as with a said transfer device (3) for transferring an individually packaged product being conveyed from the first to the second conveying section, wherein the first and second conveying sections are said twin-belt conveyors (4, 5) with two said lateral, endlessly driven circulating belts (6, 7; 8, 9) each, wherein the said second twin-belt conveyor (5) directly adjoins the longitudinal end of the said first twin-belt conveyor (4) laterally at an angle and the longitudinal end of the said circulating belts (6, 7) of the said first twin-belt conveyor (4) extends in the said angle area (10) into the extension of the conveyor track of the said second twin-belt conveyor (5) at least up to the middle (M) of the conveyor track of the said second twin-belt conveyor, and said non-driven guide rollers (11) are provided in the said angle area (10) between the said two circulating belts (6, 7) of the said first twin-belt conveyor (4), wherein the said lateral circulating belts (6, 7; 8, 9) of the said two twin-belt conveyors (4, 5) are the only drive means of the said conveying means (1)
**characterized by** obliquely positioning of the said non-driven (first) guide rollers (11) so that the said guide rollers are enabled to be the exclusive deflecting means in the said angle area (10) and deflect said individually packaged product (2) being conveyed from the said first twin-belt conveyor (4) on a curved path to the said second twin-belt conveyor (5).

2. Conveying means in accordance with claim 1,
**characterized in that**
said additional (second) guide rollers (11) of the type of the said first guide rollers are also provided as said deflecting means between the said two circulating belts (8, 9) outside the said angle area (10) in the area of the longitudinal end of the said second twin-belt conveyor (5), which adjoins the said first twin-belt conveyor (4).

3. Conveying means in accordance with claim 1 or 2,
**characterized in that**
the projection and/or the position of the diverse axes of rotation of the said first and second guide rollers (11) can be set.

4. Conveying means in accordance with one of the claims 1 through 3,
**characterized in that**
the said first and second guide rollers (11) are narrow individual rollers made of rubber.

5. Conveying means in accordance with one of the claims 1 through 4,
**characterized in that**
the said first guide rollers (11) are accommodated and fastened in a said bottom plate (12) as an assembly unit, the said bottom plate being arranged in the said angle area (10) at least partially between the said two circulating belts (6, 7) of the said first twin-belt conveyor (4).

6. Conveying means in accordance with one of the claims 2 through 5,
**characterized in that**
the said second guide rollers (11) are accommodated and fastened in a said separate bottom plate (13) of their own as an assembly unit, the said bottom plate (13) being arranged adjoining the said angle area (10) in the area of the longitudinal end of the said second twin-belt conveyor (5) in the extension of and/or between the said two circulating belts (8, 9) of the said second twin-belt conveyor (5).

7. Conveying means in accordance with one of the claims 1 through 6,
**characterized by** the longitudinal end of the said circulating belts (6, 7) of the said first twin-belt conveyor (4) extending up to the said middle (M) or just beyond the said center of the extension of the conveyor track of the said second twin-belt conveyor (5), wherein at least one said guide roller (11), which is aligned or nearly aligned with the conveyor track of the said second twin-belt conveyor (5), is provided in the extension of the said circulating belt (7) of the said first twin-belt conveyor (4), which said circulating belt (7) is adjacent to the said second twin-belt conveyor (5).

8. Conveying means in accordance with one of the claims 5 through 7,
**characterized in that**
the said bottom plates (12, 13) have said recesses, through which the said guide rollers (11) slightly project upward with a projection, and the said guide rollers can be brought into a rolling guiding meshing with the bottom side of the said individually packaged product (2).

9. Conveying means in accordance with one of the claims 1 through 8,
**characterized in that**
a said lateral limitation (14), a said circular arc (14a) at least radially on the outside, is provided for the said individually packaged product (2) in the direction of conveying, preferably in the said angle area (10) of the said first twin-belt conveyor (4).

10. Conveying means in accordance with one of the claims 1 through 9,
**characterized in that**
the said first and second twin-belt conveyors extend at right angles to one another.

11. Conveying means in accordance with one of the claims 1 through 10,
**characterized in that**
a monitoring means is provided, which monitors the travel of the said individually packaged product (2) in a curve, especially the arc over which the said individually packaged product travels, and/or stoppage of the said individually packaged product.

## Revendications

1. Dispositif de transport (1) à changement de direction pour le transport de marchandises de détail (2) le long d'un premier tronçon de transport et d'un deuxième tronçon de transport présentant une orientation différente, également doté d'un agencement de transfert (3) pour transférer les marchandises de détail transportées du premier au deuxième tronçon de transport, le premier et le deuxième tronçon de transport étant des convoyeurs à double bande (4, 5) équipés respectivement de deux bandes rotatives (6, 7 ; 8, 9) latérales entraînées sans fin, le deuxième convoyeur à double bande (5) se raccordant à l'extrémité longitudinale du premier convoyeur à double bande (4) directement en côté selon un certain angle et l'extrémité longitudinale des bandes rotatives (6, 7) du premier convoyeur à double bande (4) atteignant, dans la zone d'angle (10), dans le prolongement de la trajectoire de transport du deuxième convoyeur à double bande (5), au moins le centre de la trajectoire (M) du deuxième convoyeur à double bande et des rouleaux de guidage (11) non entraînés étant prévus dans la zone d'angle (10) située entre les deux bandes rotatives (6, 7) du premier convoyeur à double bande (4), les bandes rotatives (6, 7 ; 8, 9) latérales des deux convoyeurs à double bande (4, 5) étant les seuls moyens d'entraînement du dispositif de transport (1);
**caractérisé par** la position oblique des (premiers) rouleaux de guidage (11) non entraînés, de sorte que les rouleaux de guidage peuvent servir de moyens de déviation exclusifs dans la zone d'angle (10) et que les marchandises de détail (2) transportées sont déviées du premier convoyeur à double bande (4) au deuxième convoyeur à double bande (5) en suivant une trajectoire incurvée.

2. Dispositif de transport selon la revendication 1,
**caractérisé en ce que**
d'autres (deuxièmes) rouleaux de guidage (11) du type des premiers rouleaux de guidage prenant la forme de rouleaux de déviation sont également prévus à l'extérieur de la zone d'angle (10) dans la zone de l'extrémité longitudinale du deuxième convoyeur à double bande (5) qui se trouve à côté du premier convoyeur à double bande (4), entre les deux bandes rotatives (8, 9).

3. Dispositif de transport selon la revendication 1 ou 2,
**caractérisé en ce que**
les premiers et deuxièmes rouleaux de guidage (11) sont réglables par rapport à leurs extrémités en porte-à-faux et/ou à la position des différents axes de rotation.

4. Dispositif de transport selon l'une quelconque des revendications 1 à 3,
**caractérisé en ce que**
les premiers et deuxièmes rouleaux de guidage (11) sont des rouleaux individuels étroits en caoutchouc.

5. Dispositif de transport selon l'une quelconque des revendications 1 à 4,
**caractérisé en ce que**
les premiers rouleaux de guidage (11) sont logés et fixés dans une plaque de fond (12) prenant la forme d'une unité de construction, la plaque de fond étant disposée dans la zone d'angle (10) située au moins en partie entre les deux bandes rotatives (6, 7) du premier convoyeur à double bande (4).

6. Dispositif de transport selon l'une quelconque des revendications 2 à 5,
**caractérisé en ce que**
les deuxièmes rouleaux de guidage (11) sont logés et fixés dans une plaque de fond (13) propre prenant la forme d'une unité de construction, la plaque de fond (13) étant disposée à côté de la zone d'angle (10) dans la zone de l'extrémité longitudinale du deuxième convoyeur à double bande (5) dans le prolongement et/ou entre les deux bandes rotatives (8, 9) du deuxième convoyeur à double bande (5).

7. Dispositif de transport selon l'une quelconque des revendications 1 à 6,
**caractérisé par**
une extension de l'extrémité longitudinale des bandes rotatives (6, 7) du premier convoyeur à double bande (4) jusqu'au centre (M) ou presque jusqu'au centre du prolongement de la trajectoire de transport du deuxième convoyeur à double bande (5), au moins un premier rouleau de guidage (11) étant prévu dans le prolongement de la bande rotative (7) du premier convoyeur à double bande (4) connexe au deuxième convoyeur à double bande (5), le premier rouleau de guidage étant aligné ou quasiment aligné avec la trajectoire de transport du deuxième convoyeur à double bande (5).

8. Dispositif de transport selon l'une quelconque des revendications 5 à 7,
**caractérisé en ce que**
les plaques de fond (12, 13) comportent des évidements à travers lesquels les rouleaux de guidage (11) font légèrement saillie vers le haut en une extrémité en porte-à-faux et dans lequel les rouleaux de guidage peuvent être amenés en prise de guidage par roulement avec le côté de fond des marchandises de détail (2).

9. Dispositif de transport selon l'une quelconque des revendications 1 à 8,
**caractérisé en ce que**
une délimitation latérale (14) est prévue dans la direction de transport pour les marchandises de détail (2), de préférence dans la zone d'angle (10) du premier convoyeur à double bande (4), au moins radialement à l'extérieur d'un élément en arc de cercle (14a).

10. Dispositif de transport selon l'une quelconque des revendications 1 à 9,
**caractérisé en ce que**
les premier et deuxième convoyeurs à double bande sont disposés perpendiculairement l'un par rapport à l'autre.

11. Dispositif de transport selon l'une quelconque des revendications 1 à 10,
**caractérisé en ce que**
un dispositif de surveillance est prévu, lequel surveille la course incurvée des marchandises de détail (2), notamment l'arc parcouru par les marchandises de détails et/ou les marchandises de détail à l'arrêt.
